# NEUE EUROPÄISCHE PATENTSCHRIFT

(11) **EP 1 586 397 B2**
(45) Veröffentlichungstag und Bekanntmachung des Hinweises auf die Entscheidung über den Einspruch: **01.10.2014**
(45) Hinweis auf die Patenterteilung: 28.07.2010
(21) Anmeldenummer: 05007494.7
(22) Anmeldetag: 06.04.2005
(51) Int. Cl.: B23B 31/16, B23B 31/40, B23B 23/04

(54) **Spannfutter und Kombination eines Spannfutters mit einer Einsatzbüchse**
Chuck and combination of a chuck and an insertable attachment
Mandrin et combinaison d'un mandrin et d'un accessoire

(30) Priorität: 16.04.2004 DE 202004006302 U
(43) Veröffentlichungstag der Anmeldung: 19.10.2005
(73) Patentinhaber: HAINBUCH GMBH SPANNENDE TECHNIK, D-71672 Marbach (DE)
(72) Erfinder: Weller, Hans-Michael, 71672 Marbach (DE)
(74) Vertreter: Patentanwälte Ruff, Wilhelm, Beier, Dauster & Partner

(56) Entgegenhaltungen:
- DE-A1- 3 834 735
- DE-A1- 4 110 001
- DE-B1- 2 607 506
- DE-C1- 10 214 315
- DE-U1- 20 320 084

## Beschreibung

### Anwendungsgebiet und Stand der Technik

Die Erfindung betrifft ein Spannfutter gemäß dem Oberbegriff des Anspruchs 1. Ebenso betrifft die Erfindung eine Kombination eines vorgenannten Spannfutters mit einer Einsatzbüchse und einer Innenspanneinrichtung und eine Kombination eines Spannfutters mit einer weiteren Halteeinrichtung.

Aus der DE 10214315 C1 ist es bekannt, an einem sogenannten Drei-Backen-Futter eine Büchse einzusetzen, welche eine zentrale Durchgangsöffnung verschließt. So kann verhindert werden, dass die Durchgangsöffnung beschädigt wird oder Schmutz eindringt.

Aus der DE 4110001 A1 und der DE 3834735 A1 sind weitere derartige Spannfutter bekannt mit einem Futterkörper, in den von vorne Einsatzbüchsen in eine zentrale Öffnung eingesetzt sind, um das Spannfutter nach innen abzuschließen. Diese Einsatzbüchsen sind am Innenrand abgefast.

Aus der DE 2607506 B1 ist ein Spannwerkzeug bekannt, das aus einer Vielzahl von Segmenten besteht, die durch elastische Verbindungen zusammengehalten werden. An einer Kegelmantelfläche um eine zentrale Öffnung herum kann ein entsprechend geformter Spannbolzen nach innen gezogen werden, der die Segmente nach außen drückt zum Innenspannen von Rohren oder dergleichen, die das Spannwerkzeug übergreifen. Somit ist dieses Spannwerkzeug ausschließlich zum Innenspannen geeignet.

Aus der DE 20320084 U1 ist es bekannt, eine Innenspanneinrichtung an einem speziell dafür ausgebildeten Futter anzubringen.

### Aufgabe und Lösung

Der Erfindung liegt die Aufgabe zugrunde, ein eingangs genanntes Spannfutter sowie eine genannte Kombination zu schaffen, mit denen Probleme des Standes der Technik vermieden werden können, das Anwendungsgebiet von Spannfuttern erweitert werden kann und die Wechselzeiten an Werkzeugmaschinen verringert werden können.

Gelöst wird diese Aufgabe durch ein Spannfutter mit den Merkmalen des Anspruchs 1, eine Kombination mit den Merkmalen des Anspruchs 9 sowie eine Kombination mit den Merkmalen des Anspruchs 10. Vorteilhafte sowie bevorzugte Ausgestaltungen der Erfindung sind in den weiteren Ansprüchen enthalten und werden im folgenden näher erläutert. Der Wortlaut der Ansprüche wird durch ausdrückliche Bezugnahme zum Inhalt der Beschreibung gemacht. Dabei werden einzelne Ausbildungsmöglichkeiten, die im Rahmen der beanspruchten Erfindung liegen bzw. realisiert werden können, sowohl für das Spannfutter als auch für die Einsatzbüchse und die Kombination beschrieben.

Erfindungsgemäß weist ein Spannfutter einen Futterkörper auf mit einer Art Zentralausnehmung für ein zu spannendes Werkstück oder als Zugang zu einer Zugeinrichtung. Diese Zentralausnehmung kann auch ein Durchlass sein. Es sind mehrere Spannbacken vorhanden, die in radialen Führungen an der vorderen Stirnseite des Futterkörpers bewegbar angeordnet und verstellbar sind. An der Zentralausnehmung ist von der vorderen Stirnseite nach innen versetzt eine zumindest teilweise durchgängige Innenkegelfläche vorgesehen, ebenso zumindest eine Planfläche im Bereich des Außenrandes der Innenkegelfläche oder an der Stirnfläche. Innenkegelfläche und Planfläche sind zum Einsetzen einer weiteren Halteeinrichtung an dem Spannfutter ausgebildet, wobei sie beide sehr exakt gefertigt werden, um eine ausreichende Exaktheit derfertigen Bauteile zu gewährleisten, insbesondere einen sehr guten Sitz an der Innenkegelfläche und der Planfläche. Die Innenkegelfläche und die wenigstens eine Planfläche liegen so zueinander, dass entweder eine Mittelachse oder Senkrechte der Planfläche parallel zu einer Mittelachse der Innenkegelfläche verläuft oder aber sogar mit ihr zusammenfällt. Vorteilhaft sind Planflächen symmetrisch bzw. gleich verteilt um die Innenkegelfläche vorgesehen.

In Weiterbildung der Erfindung kann vorgesehen sein, dass die Innenkegelfläche etwa auf Höhe der bewegbaren Spannbacken an der Innenseite der Zentralausnehmung vorgesehen ist. Dies bedeutet, dass sie vorteilhaft nahe der Stirnseite vorgesehen ist, so dass mit einer einsetzbaren weiteren Halteeinrichtung eine gute Passung möglich ist.

Es können eine durchgängige oder mehrere separate Planflächen um die Innenkegelfläche herum verteilt sein. Dies kann davon abhängen, wo die Planflächen genau vorgesehen sind, was nachfolgend noch genauer beschrieben wird. Die Planflächen sollten auch geschützt sein, solange sie nicht benötigt werden, damit sie keine Beschädigung erleiden.

Es ist möglich, an der Stirnseite des Futterkörpers eine die Zentralausnehmung umgebende, kreisringartige Planfläche vorzusehen, die vorteilhaft aus dem Material der Vorderseite bzw. Stirnseite selber herausgearbeitet ist. Eine solche Planfläche wird beispielsweise an dem Futter selber durch Schleifen oder Läppen odgl. hergestellt.

Bei einer Ausgestaltung der Erfindung kann vorgesehen sein, dass die Innenkegelfläche aus dem Material der Zentralausnehmung bzw. des vorderen Teils des Futterkörpers selber herausgearbeitet ist. Dabei kann sie im Bereich der sie durchstoßenden Spannbacken-Führungen unterbrochen sein, so dass sie unterbrochen oder aufgeteilt ist, beispielsweise nach Art von Kreisringsegmenten. Unterbrochene Bereiche der Innenkegelfläche liegen immer auf einer gedachten durchgehenden Kegelfläche bzw. bilden Bereiche davon.

Bei einer vorteilhaften Ausgestaltung der Erfindung kann eine Einsatzbüchse in die Zentralausnehmung einsetzbar sein bzw. eingesetzt werden. Dabei ist die Innenkegelfläche an der Innenfläche der Einsatzbüchse ausgebildet, insbesondere im oberen Bereich nahe der Stirnseite des Futterkörpers. Sie kann vorteilhaft im wesentlichen durchgehend bzw. kreisringartig sein.

Es ist möglich, dass die Einsatzbüchse am vorderen Rand einen oder mehrere radial abstehende Flanschabschnitte aufweist. An diesen Flanschabschnitte sind Befestigungsmittel zur Befestigung der Einsatzbüchse an der vorderen Stirnseite des Spannfutters vorgesehen, beispielsweise als durchgängige Schrauben.

Bei einer vorteilhaften Ausgestaltung einer Einsatzbüchse sind daran eine oder mehrere Planflächen vorgesehen, vorzugsweise sogar alle. Dies erleichtert die Fertigung, da dann an dem Spannfutter keine Planflächen vorgesehen sein müssen, die wegen der hohen Genauigkeit der Fertigung gewissen Aufwand bedeuten. Die Planflächen können vorteilhaft in etwa auf Höhe der Stirnseite des Futters liegen bzw. sollten diese ein Stück überragen.

Besonders vorteilhaft sind an einer Einsatzbüchse die Planflächen an jeweils abstehenden Flanschabschnitten vorgesehen. Möglich ist es, eine Planfläche an der vorderen Stirnseite der Einsatzbüchse vorzusehen nach Art eines im wesentlichen umlaufenden Kreisrings an einer Stirnseitenverdickung der Einsatzbüchse.

Die Flanschabschnitte können in kongruent geformten Ausnehmungen in der Stirnseite aufgenommen sein und in den Ausnehmungen im wesentlichen vollflächig aufliegen. Dies ist besonders günstig, da dann die Planflächen der Einsatzbüchse an dem Futterkörper abgestützt sind, so dass die gewünschte Genauigkeit eingehalten wird.

Bei der Erfindung ist an dem Spannfutter eine Adaptereinrichtung vorgesehen für eine innere Zugeinrichtung des Spannfutters mit axialer Wirkrichtung. Die Adaptereinrichtung ist im Bereich hinter der Zentralausnehmung angeordnet zur gekoppelten Wirkverbindung mit der weiteren Halteeinrichtung, die an dem Spannfutter befestigbar ist zur Betätigung einer Spannvorrichtung an der Halteeinrichtung. So kann beispielsweise eine Innenspanneinrichtung gemäß der erfinderischen Kombination mittels der Adaptereinrichtung durch die Zugeinrichtung des Spannfutters, mit der üblicherweise die Spannbacken bewegt werden, betätigt werden. Bei einer speziellen Ausbildung der weiteren Halteeinrichtung kann sogar über die Spannbacken selber im eingesetzten Zustand eine Spannvorrichtung betätigt werden, sodass die Spannbacken nicht ausgetauscht werden müssen und für die Halteeinrichtung kein Adapter odgl. benötigt wird.

Die Einsatzbüchse kann vorteilhaft einen durchgehenden Durchlass aufweisen, beispielsweise nach Art eines offenen Bodens. So kann beispielsweise eine vorbeschriebene Ankopplung an eine Zugeinrichtung erfolgen.

Die erfindungsgemäße Kombination besteht aus einem vorgenannten Spannfutter, in das eine vorgenannte Einsatzbüchse eingesetzt ist und dann eine eingangs genannte Halteeinrichtung, insbesondere eine Innenspanneinrichtung gemäß der DE 20320084 U1, eingesetzt ist. Die weitere erfindungsgemäße Kombination besteht aus dem Spannfutter und der Halteeinrichtung.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen dargestellt und werden im folgenden näher erläutert. In den Zeichnungen zeigt:
- Fig. 1: eine Schrägansicht eines erfindungsgemäßen Drei-Backen-Futters mit einer Innenkegelfläche in der Zentralausnehmung des Futters und einer stirnseitigen Planfläche,
- Fig. 2: eine Schrägdarstellung einer Innenspanneinrichtung, welche in das Futter gemäß Fig. 1 einsetzbar ist,
- Fig. 3: einen Schnitt durch das Drei-Backen-Futter gemäß Fig. 1, in welches die Innenspanneinrichtung gemäß Fig. 2 eingesetzt ist,
- Fig. 4: eine Abwandlung einer Anordnung ähnlich Fig. 3, bei welchem eine massive Mitnehmerspitze in das Drei-Backen-Futter eingesetzt ist und
- Fig. 5: eine Schrägansicht einer Einsatz-Büchse, welche in ein übliches Drei-Backen-Futter eingesetzt werden kann und welche eine Innenkegelfläche sowie eine stirnseitige Planfläche aufweist.

### Detaillierte Beschreibung der Ausführungsbeispiele

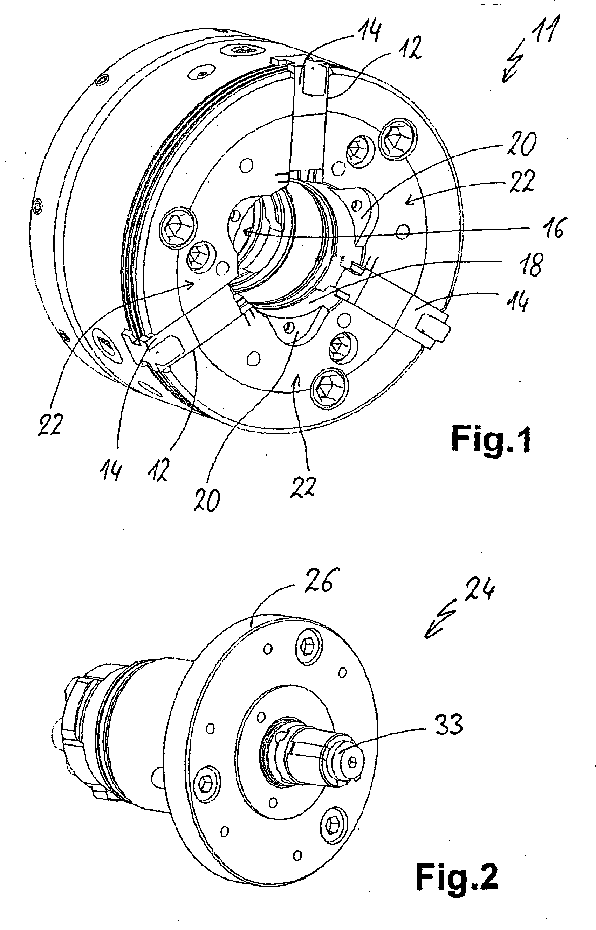

In Fig. 1 ist ein erfindungsgemäßes Drei-Backen-Futter 11 dargestellt. Ein solches Futter ist beispielsweise auch aus der zuvor genannten DE 10214315 C1 bekannt, auf welche bezüglich der einzelnen Ausgestaltung ausdrücklich verwiesen wird.

In die Führungen 12 der einzelnen Backen sind spezielle Abdeckbacken 14 eingesetzt. Diese stehen über die Stirnseite des Futters 11 nicht über und verschließen die Führungen 12 gegen Verschmutzen.

Das Futter 11 weist eine Zentralausnehmung 16 auf. Diese weist eine Innenkegelfläche 18 auf. Es ist zu erkennen, wie die Innenkegelfläche 18 von den Führungen 12 durchstoßen wird, was jedoch nicht stört, da sie insgesamt auf der Mantelfläche eines Innenkegels liegt. Nach innen zu ist die Zentralausnehmung 16 durchgehend.

Vom Rand der Zentralausnehmung 16 bzw. der Innenkegelfläche 18 erstrecken sich drei flügelartige Einschnitte 20 mit jeweils einer Gewindebohrung. Diese können beispielsweise dazu dienen, eine abdeckende Einsatz-Büchse, wie sie insbesondere auch in der vorgenannten DE 10214315 C1 beschrieben ist, aufzunehmen und zu befestigen.

An der Stirnseite des Futters 11 ist eine kreisringartige Planfläche 22 vorgesehen. Diese ist im Gegensatz zu der sonstigen Stirnseite exakt abgedreht und stimmt exakt mit der Mittelachse der Innenkegelfläche 18 sowie der Drehachse des Futters 11 überein. Die Abdeckbacken 14 verlaufen dabei unterhalb der Planflächen 22. Auch sonst gibt es an dem Futter 11 keine über die Planflächen überstehenden Teile.

In Fig. 2 ist eine Innenspanneinrichtung 24 dargestellt, wie sie beispielsweise aus der DE 20320084 U1 bekannt ist, deren Inhalt hiermit ausdrücklich zum Inhalt der vorliegenden Beschreibung gemacht wird. Sie weist eine zentrale Platte 26 auf, welche nach Art eines Schildes die sonstige Innenspanneinrichtung 24 trägt. Sie weist eine Zugstange 33auf, mit der beispielsweise die Segmentspannbüchse auf einen Spanndorn 34 gezogen werden kann zur Innenspannung eines Werkstücks.

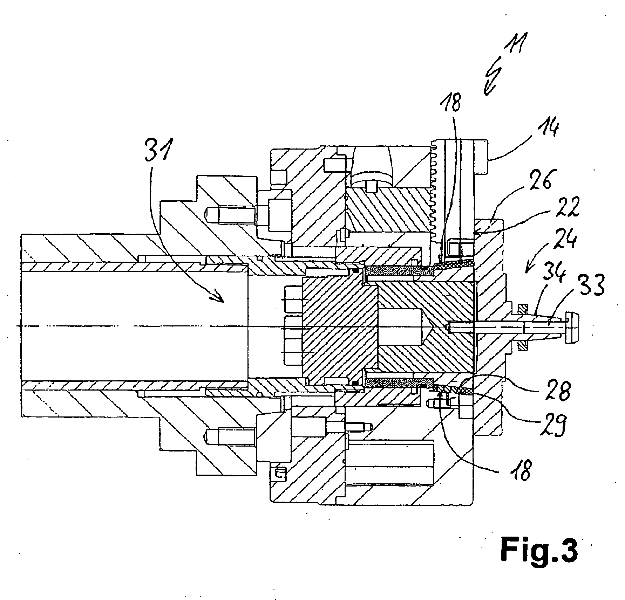

Aus der seitlichen Darstellung in Fig. 3 ist zu erkennen, wie die Innenspanneinrichtung 24 in das Futter 11 eingesetzt ist. Dabei liegt eine Passfläche 28, welche mit einer Kugelführung 29 umgeben ist, an der Innenkegelfläche 18 an. Gleichzeitig liegt die Rückseite der Platte 26 an der Planfläche 22 an. Über beispielsweise drei Schrauben, welche in Fig. 2 erkennbar sind und durch die Platte 26 hineinreichen sowie in Gewindeöffnungen, welche sich im Bereich der Planfläche 22 befinden, greifen, kann der Rückteil der Innenspanneinrichtung 24 in das Futter 11 hineingezogen und darin befestigt bzw. arretiert werden.

Des weiteren wird mittels einer Zugeinrichtung 31, welche aus dem Stand der Technik, beispielsweise der vorgenannten DE 20320084 U1 bekannt ist, von hinten an die Innenspanneinrichtung 24 angegriffen und diese betätigt, so dass die Zugstange 33 eine auf einen Spanndorn 34 aufsetzbare Spannbüchse anzieht und aufweitet zum Innenspannen.

Durch die erfindungsgemäße Anordnung gemäß Fig. 3 kann eine Innenspanneinrichtung 24 an einem erfindungsgemäßen Drei-Backen-Futter 11 befestigt werden. Dazu braucht dieses Futter 11 nur geringfügig modifiziert werden gegenüber einem üblichen Drei-Backen-Futter. Insbesondere sind lediglich die Innenkegelfläche 18 sowie die Planfläche 22 vorzusehen. Zum Umrüsten werden die Spannbacken abgenommen und die Abdeckbacken 14 eingesetzt sowie die Innenspanneinrichtung 24 befestigt, damit man die erfindungsgemäße Kombination erhält. Damit können Umrüstzeiten erheblich verringert werden.

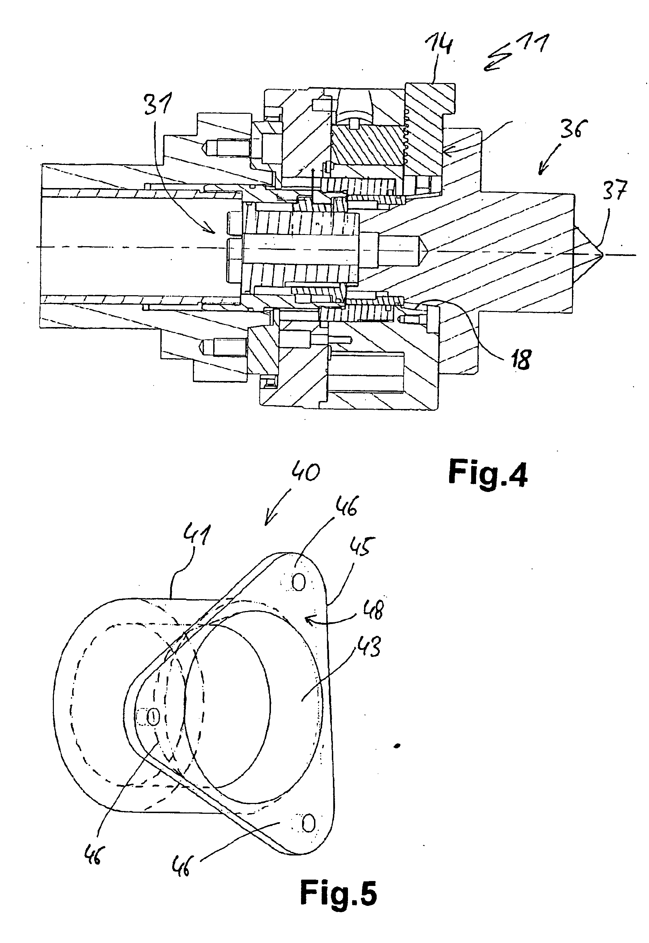

In Fig. 4 ist als Alternative zu der Innenspanneinrichtung 24 dargestellt, wie eine Mitnehmereinrichtung 36 mit einer Mitnehmerspitze 37 an dem Futter 11 angesetzt werden kann. Hier ist es beispielsweise durch die Zugeinrichtung 31 möglich, die Mitnehmereinrichtung 36 ohne eine Verschraubung gemäß Fig. 3 an dem Futter 11 zu befestigen. Ansonsten erfolgt die Fügung an der Innenkegelfläche 18 mit einer Passfläche 28 ebenso wie in Fig. 3.

Eine alternative Umrüstung eines Drei-Backen-Futters ist aus Fig. 5 ersichtlich. Fig. 5 zeigt eine Einsatz-Büchse 40, ähnlich einer solchen, wie sie aus der DE 10214315 C1 hervorgeht. Allerdings weist diese EinsatzBüchse 40 am Beginn des Schafts 41 eine Innenkegelfläche 43 auf. Diese entspricht in etwa der Innenkegelfläche 18 gemäß Fig. 1. Des weiteren ist am Beginn des Schafts 41 flanschartig abstehend ein Ringansatz 45 mit flügelartig abstehenden Abschnitten 46 vorhanden. Mit den Abschnitten 46 kann eine Verschraubung an den Einschnitten 20 eines Futters ähnlich Fig. 1 erfolgen. Des weiteren ist die vordere Stirnseite 48 des Ringansatzes 45 sowie der Abschnitte 46 als Planfläche 48 ausgebildet. Das bedeutet, dass sie exakt rechtwinklig zu der Mittellängsachse der Innenkegelfläche 43 steht. Eine solche Planfläche an der Stirnseite 48 ist zwar etwas kleiner als diejenige bei dem Futter 11 gemäß Fig. 1, sie ist jedoch immer noch in vielen Fällen ausreichend groß.

Wird nun eine solche Einsatz-Büchse 40 gemäß Fig. 5 in ein Futter 11 ähnlich Fig. 1 eingesetzt, wobei dieses Futter keine Innenkegelfläche und auch keine Planfläche aufzuweisen braucht, so kann ein an sich beliebiges Drei-Backen-Futter, wie es beispielsweise aus der DE 10214315 C1 hervorgeht, verwendet werden. Die benötigte Innenkegelfläche 43 ist an der Büchse 40 selber vorgesehen. Die Abschnitte 46 liegen in den Einschnitten 20 voll an der Vorderseite des Futters an, wobei die Bemaßung so vorzusehen ist, dass dann die Planflächen 48 an der Stirnseite der Büchse 40 als Planflächen für die gesamte Kombination Futter 11 und Büchse 40 gelten. Dadurch, dass die Abschnitte 46 flächig an den Einschnitten 20 aufliegen, ist eine genaue Passung möglich, so dass die Planflächen an der Stirnseite 48 die erforderliche Genauigkeit aufweisen.

Auf diese Weise ist es möglich, dass nicht ein ganzes Drei-Backen-Futter selber vorbereitet sein muß zum Einsatz mit einer Innenspanneinrichtung beispielsweise gemäß der Fig. 2, 3 oder 4, sondern ein an sich gewöhnliches Futter verwendet werden kann. Sind an diesem gewöhnlichen Futter keinerlei Einschnitte oder dergleichen 20 vorgesehen, so ist es möglich, den Ringansatz 45 der Büchse 40 nach Art eines flanschartigen Kreisrings über die Stirnseite des Futters überstehen zu lassen und als umlaufende Planfläche zu nutzen.

In weiterer Ausbildung der Erfindung ist es möglich, quasi als Kombination der vorbeschriebenen Möglichkeiten, entweder nur eine Innenkegelfläche oder nur eine Planfläche an dem Futter selber und den anderen Bestandteil an der Einsatz-Büchse vorzusehen.

## Patentansprüche

1. Spannfutter (11) mit einem Futterkörper, der eine Zentralausnehmung (16) für ein zu spannendes Werkstück oder als Zugang zu einer Zugeinrichtung (31) aufweist, mit mehreren Spannbacken, die in radialen Führungen (12) an der vorderen Stirnseite des Futterkörpers bewegbar angeordnet und verstellbar sind, wobei an der Zentralausnehmung von der vorderen Stirnseite nach innen versetzt eine zumindest teilweise durchgängige Innenkegetfläche (18, 43) vorgesehen ist und zumindest eine Planfläche (22, 48) im Bereich des Außenrandes der Innenkegelfläche oder an der Stirnfläche vorgesehen ist, wobei eine Mittelachse der Planfläche mit einer Mittelachse der Innenkegelfläche zusammenfällt, wobei Innenkegelfläche und Planfläche zum Einsetzen einer weiteren Halteeinrichtung an dem Spannfutter (11) ausgebildet sind, **dadurch gekennzeichnet, dass** an dem Spannfutter eine Adaptereinrichtung vorgesehen ist für eine innere Zugeinrichtung des Spannfutters (11) mit axialer Wirkrichtung, wobei die Adaptereinrichtung im Bereich hinter der Zentralausnehmung (16) angeordnet ist zur gekoppelten Wirkverbindung mit der weiteren Halteeinrichtung, die an dem Spannfutter befestigbar ist zur Betätigung einer Spannvorrichtung (24) an der Halteeinrichtung.

2. Spannfutter nach Anspruch 1, **dadurch gekennzeichnet, dass** die Innenkegelfläche (18, 43) etwa auf Höhe der bewegbaren Spannbacken an der Innenseite der Zentralausnehmung (16) vorgesehen ist.

3. Spannfutter nach Anspruch 1 oder 2, **dadurch gekennzeichnet, dass** eine durchgängige oder mehrere separate Planflächen (22, 48) um die Innenkegelfläche (18, 43) herum verteilt sind, wobei insbesondere an der Stirnseite des Futterkörpers (11) eine die Zentralausnehmung (16) umgebende, kreisringartige Planfläche (22) vorgesehen ist, die vorzugsweise aus dem Material der Vorderseite bzw. Stirnseite selber herausgearbeitet ist.

4. Spannfutter nach einem der vorhergehenden Ansprüche, **dadurch gekennzeichnet, dass** die Innenkegelfläche (18) aus dem Material der Zentralausnehmung (16) bzw. des vorderen Teils des Futterkörpers (11) herausgearbeitet ist, wobei sie vorzugsweise im Bereich der sie durchstoßenden Führungen (12) für die Spannbacken unterbrochen ist und dadurch nach Art von Kreisringsegmenten aufgeteilt ist.

5. Spannfutter nach einem der Ansprüche 1 bis 3, **dadurch gekennzeichnet, dass** eine Einsatzbüchse (40) in die Zentralausnehmung (16) einsetzbar bzw. eingesetzt ist, wobei die Innenkegelfläche (43) an der Innenfläche der Einsatzbüchse ausgebildet ist, insbesondere im oberen Bereich nahe der Stirnseite des Futterkörpers (11), wobei vorzugsweise die Innenkegelfläche (43) kreisringartig ist.

6. Spannfutter nach Anspruch 5, **dadurch gekennzeichnet, dass** die Einsatzbüchse (40) am vorderen Rand einen oder mehrere radial abstehende Flanschabschnitte (45, 46) aufweist, an welchen Befestigungsmittel zur Befestigung der Einsatzbüchse (40) an der vorderen Stirnseite des Spannfutters (11) vorgesehen sind.

7. Spannfutter nach Anspruch 5 oder 6, **dadurch gekennzeichnet, dass** an der Einsatzbüchse (40) eine oder mehrere, vorzugsweise alle, Planflächen (48) vorgesehen sind, wobei sie insbesondere in etwa auf Höhe der Stirnseite liegen bzw. diese ein Stück überragen.

8. Spannfutter nach Anspruch 7, **dadurch gekennzeichnet, dass** an der Einsatzbüchse (40) mehrere, vorzugsweise drei, Planflächen (48) vorgesehen sind an jeweils abstehenden Flanschabschnitten (45, 46), wobei insbesondere die Flanschabschnitte in kongruent geformten Ausnehmungen (20) in der Stirnseite des Futters (11) aufgenommen werden und in den Ausnehmungen im wesentlichen vollflächig aufliegen.

9. Kombination eines Spannfutters (11) nach einem der Ansprüche 1 bis 8 mit einer Einsatzbüchse (40), die an ihrer Innenseite im Bereich des vorderen Endes eine Innenkegelfläche (43) aufweist, wobei die Innenkegelfläche zum Einsetzen einer weiteren Halteeinrichtung (24) an dem Spannfutter (11) ausgebildet ist, wenn die Einsatzbüchse in ein Spannfutter eingesetzt ist, und mit einer Innenspanneinrichtung (24), wobei vorzugsweise Abdeckbacken (14) vorgesehen sind an dem Spannfutter (11) in den Führungen (12) der Spannbacken, welche die Führungen zur Stirnseite hin abdecken bzw. verschließen.

10. Kombination eines Spannfutters (11) nach einem der Ansprüche 1 bis 8 mit einer weiteren Halteeinrichtung, wobei die weitere Halteeinrichtung eine Spannvorrichtung (24) ist und wobei die weitere Halteeinrichtung an dem Spannfutter (11) befestigbar ist bzw. in das Spannfutter eingesetzt ist.

11. Kombination nach Anspruch 10, **dadurch gekennzeichnet, dass** die weitere Halteeinrichtung eine Innenspanneinrichtung ist (24).

## Claims

1. A chuck (11) with a chuck body having a central recess (16) for a workpiece to be clamped or as an access to a traction device (31), with multiple chuck jaws arranged to be movable and adjustable in radial guides (12) at the anterior front end of the chuck body, wherein at the central recess is provided an at least partially continuous internal cone surface (18, 43) offset from the anterior front end to the interior and at least one plane surface (22, 48) is provided in the vicinity of the outer edge of the internal cone surface or at the front end surface, wherein a central axis of the plane surface coincides with a central axis of the internal cone surface, wherein the internal cone surface and the plane surface are arranged at the chuck (11) for inserting of a further restraining device,
**characterised in that**
an adaptor device is provided on the chuck for an internal traction device of the chuck (11) having an axial effective direction, wherein the adaptor device is arranged in the vicinity of the rear of the central recess (16) for coupled operative connection to the further restraining device, fixable to the chuck for actuating of a clamping unit (24) on the restraining device.

2. The chuck according to claim 1, **characterised in that** the internal cone surface (18, 43) is provided approximately at the level of the movable chuck jaws on the inner surface of the central recess (16).

3. The chuck according to claim 1 or 2, **characterised in that** one continuous or multiple separate plane surfaces (22, 48) are disposed around the internal cone surface (18, 43), wherein in particular at the front end of the chuck body (11) and surrounding the central recess (16) an annular plane surface (22) is provided, which preferably is machined from the material of the anterior end or front end directly.

4. The chuck according to any of the preceding claims, **characterised in that** the internal cone surface (18) is machined from the material of the central recess (16) or the anterior portion of the chuck body (11), wherein preferably in the vicinity of the guides (12) that traverse it for the chuck jaws, said surface is interrupted and thereby divided in a manner of annulus segments.

5. The chuck according to any of the claims 1 through 3, **characterised in that** an insertable attachment (40) is insertable into or inserted in the central recess (16), wherein the internal cone surface (43) is provided at the inner surface of the insertable attachment, in particular in the upper portion close to the front end of the chuck body (11), wherein preferably the internal cone surface (43) is of an annular type.

6. The chuck according to claim 5, **characterised in that** the insertable attachment (40) has, at the front edge thereof, one or multiple radially projecting flange portions (45, 46) provided with fasteners for fixing the insertable attachment (40) to the anterior front end of the chuck (11).

7. The chuck according to claim 5 or 6, **characterised in that** one or multiple, preferably all, plane surfaces (48) are provided at the insertable attachment (40), wherein they are in particular provided approximately at the level of the front end or protrude therefrom in a certain length.

8. The chuck according to claim 7, **characterised in that** multiple, preferably three, plane surfaces (48) are provided at the insertable attachment (40) at respectively projecting flange portions (45, 46), wherein in particular the flange portions are received in recesses (20) congruent thereto in the front end of the chuck (11) and bear on said recesses essentially over the full surface.

9. A combination of a chuck (11) according to any of the claims 1 through 8 with an insertable attachment (40) provided with an internal cone surface (43) at the inner surface in the vicinity of the anterior end thereof, wherein the internal cone surface is arranged for inserting of a further restraining device (24) at the chuck (11), when the insertable attachment is inserted in a chuck, and with an internal clamping unit (24), wherein in the guides (12) of the chuck jaws preferably covering jaws (14) are provided at the chuck (11), to cover or close the guides to the front end side.

10. The combination of a chuck (11) according to any of the claims 1 through 8 with a further restraining device, wherein the further restraining device is a clamping unit (24), and wherein the further restraining device is fixable to the chuck (11) or is inserted in the chuck.

11. The combination according to claim 10, **characterised in that** the further restraining device is an internal clamping unit (24).

## Revendications

1. Mandrin de serrage (11) avec un corps de mandrin, qui présente un évidement central (16) pour une pièce d'oeuvre à serrer ou bien servant d'accès à un dispositif de traction (31), avec plusieurs mâchoires de serrage disposées et ajustables de manière déplaçable dans des guidages radiaux (12) à la face frontale antérieure du corps de mandrin, sachant qu'auprès de l'évidement central on prévoit de manière décalée à partir de la face frontale antérieure vers l'intérieur une surface conique intérieure (18, 43) au moins en partie continue et au moins une surface plane (22, 48) dans le domaine du bord extérieur de la surface conique intérieure ou bien à la face frontale, sachant qu'une ligne médiane de la surface plane coïncide avec une ligne médiane de la surface conique intérieure, sachant que la surface conique intérieure et la surface plane sont réalisée de manière à permettre l'insertion d'un ultérieur dispositif de maintien sur le mandrin de serrage (11),
**caractérisé en ce qu'**auprès du mandrin de serrage on prévoit un dispositif d'adaptateur pour un dispositif de traction intérieur du mandrin de serrage (11) avec une direction d'action axiale, sachant que le dispositif d'adaptateur est agencé dans le domaine derrière l'évidement central (16) pour une liaison active accouplée avec l'ultérieur dispositif de maintien, étant fixable sur le mandrin de serrage pour actionner un dispositif de serrage (24) sur le dispositif de maintien.

2. Mandrin de serrage d'après la revendication 1, **caractérisé en ce que** la surface conique intérieure (18, 43) est prévue à peu près à la hauteur des mâchoires de serrage déplaçables à la surface intérieure de l'évidement central (16).

3. Mandrin de serrage d'après la revendication 1 ou 2, **caractérisé en ce qu'**une surface plane continue ou bien plusieurs surfaces planes (22, 48) distinctes sont distribuées autour de la surface conique intérieure (18, 43), sachant que notamment à la face frontale du corps de mandrin (11) on prévoit une surface plane (22) genre anneau de cercle, qui entoure l'évidement central (16) et qui est de préférence façonnée dans la matière même de la face antérieure ou encore frontale.

4. Mandrin de serrage d'après une des revendications précédentes, **caractérisé en ce que** la surface conique intérieure (18) est façonnée dans la matière de l'évidement central (16) ou encore de la partie antérieure du corps de mandrin (11), sachant que sa forme est interrompue de préférence dans le domaine des guidages (12) qui la percent pour les mâchoires de serrage et qui est donc ainsi subdivisée à la façon de segments d'anneau de cercle.

5. Mandrin de serrage d'après une des revendications de 1 à 3, **caractérisé en ce qu'**une bague d'insertion (40) est insérée ou encore peut être insérée dans l'évidement central (16), sachant que la surface conique intérieure (43) est réalisée à la surface intérieure de la bague d'insertion, notamment dans un champ supérieur à proximité de la face frontale du corps de mandrin (11), sachant que de préférence la surface conique intérieure (43) présente la forme d'un anneau de cercle.

6. Mandrin de serrage d'après la revendication 5, **caractérisé en ce que** la bague d'insertion (40) présente au bord antérieur un ou plusieurs secteurs de bride (45, 46) radialement saillants, sur lesquels on prévoit des dispositifs de fixation pour l'ancrage de la bague d'insertion (40) à la face antérieure du mandrin de serrage (11).

7. Mandrin de serrage d'après la revendication 5 ou 6, **caractérisé en ce qu'**une ou plusieurs, de préférence toutes les surfaces planes (48) sont prévues sur la bague d'insertion (40), sachant que notamment elles sont situées à peu près à la hauteur de la face frontale ou encore qu'elles saillent légèrement au-delà de celle-ci.

8. Mandrin de serrage d'après la revendication 7, **caractérisé en ce qu'**on prévoit plusieurs, de préférence trois, surfaces planés (48) sur la bague d'insertion (40) à des secteurs de bride (45, 46) respectivement saillants, sachant que notamment les secteurs de bride sont logés dans des évidements (20) de forme congruente dans la face frontale du mandrin (11) et qu'ils reposent dans les évidements essentiellement à pleine surface.

9. Combinaison d'un mandrin de serrage (11) d'après une des revendications de 1 à 8 et d'une bague d'insertion (40), qui présente une surface conique intérieure (43) à sa face intérieure dans le domaine de son extrémité antérieure, sachant que la surface conique intérieure est réalisée pour permettre l'insertion d'un ultérieur dispositif de maintien (24) sur le mandrin de serrage (11) quand la bague d'insertion est insérée dans un mandrin de serrage, et avec un dispositif de serrage intérieur (24), sachant qu'on prévoit de préférence sur le mandrin de serrage (11) dans les guidages (12) des mâchoires de serrage des mâchoires de recouvrement (14), qui recouvrent ou encore ferment les guidages en direction de la face frontale.

10. Combinaison d'un mandrin de serrage (11) d'après une des revendications de 1 à 8 et d'un ultérieur dispositif de maintien, sachant que l'ultérieur dispositif de maintien est un dispositif de serrage (24) et sachant que l'ultérieur dispositif de maintien est fixable au mandrin de serrage (11) ou encore est inséré dans le mandrin de serrage.

11. Combinaison d'après la revendication 10, **caractérisée en ce que** l'ultérieur dispositif de maintien est un dispositif de serrage intérieur (24).
